# EUROPÄISCHE PATENTSCHRIFT

(11) **EP 2 336 607 B1**
(45) Veröffentlichungstag und Bekanntmachung des Hinweises auf die Patenterteilung: **10.10.2012**
(21) Anmeldenummer: 10195117.6
(22) Anmeldetag: 15.12.2010
(51) Int. Cl.: F16J 3/04, F16D 65/14

(54) **Scheibenbremse, insbesondere für ein Nutzfahrzeug**
Disc brake, in particular for a commercial vehicle
Frein à disque, en particulier pour un véhicule utilitaire

(30) Priorität: 21.12.2009 DE 102009059818
(43) Veröffentlichungstag der Anmeldung: 22.06.2011
(73) Patentinhaber: KNORR-BREMSE Systeme für Nutzfahrzeuge GmbH, 80809 München (DE)
(72) Erfinder: Asen, Alexander, 94474, Vilshofen (DE)
(74) Vertreter: Mattusch, Gundula

(56) Entgegenhaltungen:
- EP-A2- 2 199 639
- WO-A1-96/34216
- WO-A1-2008/025489
- US-A1- 2001 047 913

## Beschreibung

Die Erfindung betrifft eine Scheibenbremse insbesondere für ein Nutzfahrzeug, nach dem Oberbegriff des Anspruchs 1.

Um die in einem Aufnahmeraum des Bremssattels angeordneten funktionsrelevanten Bauteile, wie eine Zuspanneinrichtung, vor Korrosion durch Witterungseinflüsse zu schützen, ist dieser Aufnahmeraum weitgehend verschlossen, und zwar auf der dem bei einer Schiebesattelbremse zuspannseitigen Bremsbelag zugeordneten Seite mittels eines Verschlussdeckels.

Die Stellspindeln, die mittels der Zuspanneinrichtung gegen den Bremsbelag drückbar sind, sind durch den Verschlussdeckel geführt und hier jeweils mittels eines Faltenbalgs abgedichtet, der einerseits an der Stellspindel und andererseits an dem Verschlussdeckel befestigt ist.

Hierzu weist der Verschlussdeckel einen die Durchtrittsöffnung der Stellspindel umfänglich begrenzenden Kragen auf, an dessen Innenseite ein Endbereich des Faltenbalgs reibschlüssig anliegt.

Um diesen Reibschluss herstellen zu können, sind jedoch bestimmte Voraussetzungen zu erfüllen. Hierzu zählen insbesondere sehr enge Toleranzen, vor allem des lichten Durchmessers des Kragens sowie dessen Oberflächenbeschaffenheit, aber auch eine genau runde Außenkontur des Faltenbalges im Verbindungsbereich mit dem Verschlussdeckel. Nur so ist ein halbwegs sicherer Presssitz zu erreichen.

Da der Faltenbalg insgesamt aufgrund der Relativbewegung der Stellspindel, an der der Faltenbalg andererseits befestigt ist, bzw. eines mit der Stellspindel fest verbundenen Druckstücks, zum Verschlussdeckel aus einem elastischen, d.h. deformierbaren Material besteht, ist im Verbindungsbereich mit dem Verschlussdeckel in den anliegenden Endbereich des Faltenbalgs eine stabile, üblicherweise metallische Einlage eingearbeitet, bevorzugt durch Umspritzen, wenn der Faltenbalg insgesamt aus Kunststoff hergestellt ist.

Trotz des notwendigerweise betriebenen Aufwands hinsichtlich der genannten engen Durchmessertoleranzen, der Oberflächenbeschaffenheit der Anlageseite des Kragens, sowie der genau runden Kontur des Faltenbalges, besteht die Gefahr, dass der Faltenbalg durch die Relativbewegung des an der Stellspindel befestigten Endes zum am Verschlussdeckel angebrachten Endbereichs des Faltenbalgs die reibschlüssige Verbindung so weit gelöst wird, dass er aus dem Kragen herauswandert, so dass eine dauerhaft angestrebte Dichtwirkung nicht gewährleistet ist.

Daneben sind in der Folge der erforderlichen engen Toleranzen entsprechend aufwendige Fertigungsmaßnahmen erforderlich, die zu relativ hohen Fertigungskosten insgesamt führen.

In der nachveröffentlichten EP 2 199 639 A2 ist eine gattungsgemäße Scheibenbremse geoffenbart, bei der in den Faltenbalg ein Stützring eingebettet ist, der in eine umlaufende Nut eines Kragens des Verschlussdeckels formschlüssig eingreift.

Aus der WO 2008/025489 A1, der WO 96/34216 A1 sowie aus der US 2001/047913 A1 ist jeweils eine Scheibenbremse bekannt, bei der der Faltenbalg reibschlüssig an der Wandung einer Austrittsöffnung des Verschlussdeckels bzw. des Bremssattels gehalten ist. Insofern entsprechen diese Konstruktionen dem eingangs beschriebenen Stand der Technik.

Der Erfindung liegt die Aufgabe zugrunde, eine Scheibenbremse der gattungsgemäßen Art so weiterzuentwickeln, dass ihre Betriebssicherheit verbessert, die Standzeit erhöht und die Fertigungskosten reduziert werden.

Diese Aufgabe wird durch eine Scheibenbremse mit den Merkmalen des Anspruchs 1 gelöst.

Durch diese konstruktive Ausbildung werden eine ganze Reihe von Vorteilen gegenüber dem Stand der Technik erreicht.

So ist zunächst der verbesserte Halt des Faltenbalgs im Verschlussdeckel zu nennen, der dazu führt, dass ein Verrutschen oder gar Lösen des Faltenbalges aus seinem Sitz mit dem Verschlussdeckel ausgeschlossen ist.

Naturgemäß erhöht dies die Betriebssicherheit ebenso wie die Standzeit der Scheibenbremse, da der Aufnahmeraum dauerhaft, also über die gesamte Betriebszeit der Scheibenbremse abgedichtet ist, so dass weder Schmutz noch Feuchtigkeit in den Aufnahmeraum dringen können, was die darin befindlichen Funktionsteile in Mitleidenschaft ziehen würde.

Die verbesserte Funktions- bzw. Betriebssicherheit führt letztendlich zu einer Betriebskostenoptimierung, zumindest aber zu einer Betriebskostenreduzierung.

Darüber hinaus ergeben sich durch die Erfindung verminderte Fertigungskosten, da weder für den Faltenbalg im Anbindungsbereich am Verschlussdeckel, noch an der zugeordneten Anlagefläche des Kragens besonders enge Toleranzen eingehalten werden müssen bzw. der Faltenbalg durchaus in gewissem Maße unrund sein kann.

Zu der Kostenreduzierung trägt auch bei, dass die Erfindung sehr einfach zu realisieren ist. So kann der Faltenbalg unverändert bleiben, während, wie nach einer vorteilhaften Weiterbildung der Erfindung vorgesehen, in den Kragen Rastzungen eingestanzt sein können, die an der Anlagefläche zum Faltenbalg vorstehen und die in das aus einem Elastomer bestehende Material des Faltenbalges derart eingreifen, dass eine formschlüssige Sicherung in jeder Richtung erreicht wird.

Der Verschlussdeckel besteht üblicherweise aus einem Blech-Stanzteil, so dass das Einbringen der Rastzungen ohne Mehraufwand beim Stanzen des Verschlussdeckels erfolgt.

Daneben bleibt dieser in seiner übrigen Konfiguration unverändert, so dass im Servicefall, wenn beispielsweise Bremsbeläge ausgetauscht werden müssen, auch der vorhandene gegen einen neuen Verschlussdeckel getauscht werden kann, ohne dass es dazu besonderer Montagearbeiten erfordert. So kann der Faltenbalg mit seinem dem Kragen zugeordneten Endbereich in die lichte Durchtrittsöffnung für die Stellspindel eingedrückt werden mit sofortiger Wirkung des Formschlusses.

Neben den genannten Rastzungen sind selbstverständlich auch andere Formschlussmittel möglich, die in den Faltenbalg radial eingreifen, beispielsweise in Form von geprägten, vorstehenden Noppen, Spitzen oder dergleichen. Zweckmäßig sind die Formschlussmittel so gestaltet, dass sie entgegen der Einschubrichtung des Faltenbalges in die Durchtrittsöffnung für die Stellspindel im Sinne eines Widerhakens ausgebildet sind, so dass zwar das Einschieben leicht, nicht jedoch das Herausziehen überhaupt möglich ist, zumindest nicht, ohne den Faltenbalg in dem Anlagebereich zu zerstören.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse in einer geschnittenen Draufsicht
- Figur 2: eine Einzelheit der Scheibenbremse in einer geschnittenen perspek-tivischen Seitenansicht.

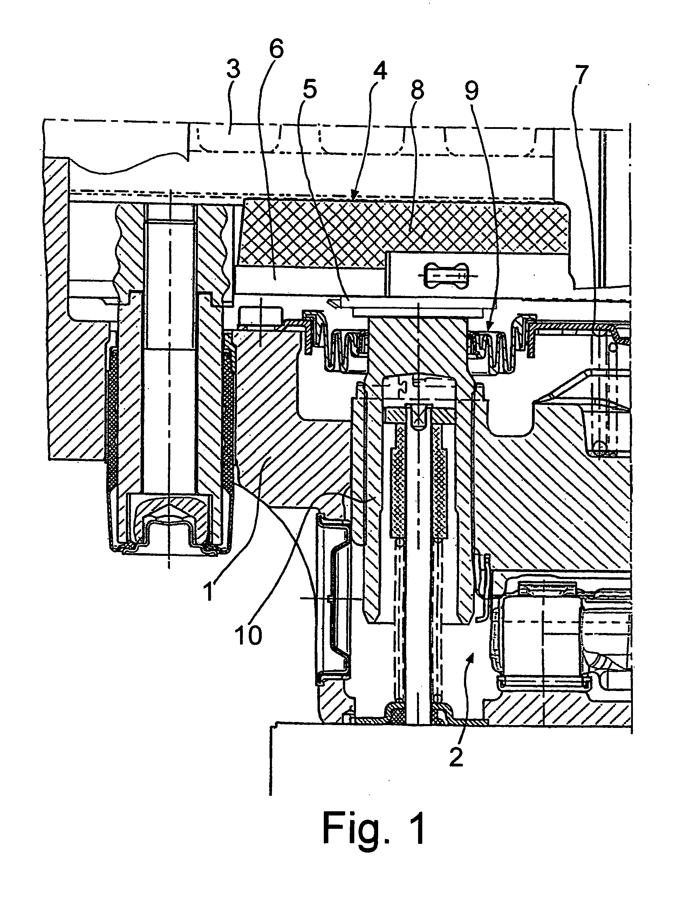

In der Figur 1 ist eine Hälfte einer Scheibenbremse dargestellt, die einen als Schiebesattel ausgebildeten Bremssattel 1 aufweist, der eine Bremsscheibe 3 in ihrem oberen Umfangsbereich umfasst. Dabei kann die Scheibenbremse pneumatisch oder elektromotorisch betätigbar sein.

Zu beiden Seiten der Bremsscheibe 3 sind Bremsbeläge 4 angeordnet, von denen hier ein aktionsseitiger dargestellt ist, der im Funktionsfall gegen die Bremsscheibe 3 pressbar ist.

Der Bremsbelag 4 besteht aus einer Trägerplatte 6, einem auf deren der Bremsscheibe 3 zugewandten Seite befestigten Reibbelag 8 sowie zwei fest mit der Trägerplatte 6 verbundenen Druckstücken 5, von denen eines in der Figur 1 erkennbar ist.

Über eine im Bremssattel 1 angeordnete, über einen Drehhebel betätigbare Zuspanneinrichtung 2 wird eine Stellspindel 10 gegen das Druckstück 5 und damit gegen den Bremsbelag 4 gedrückt. Anstelle des fest mit der Trägerplatte 6 verbundenen Druckstücks 5 kann das Druckstück auch an der Stirnseite der Stellspindel 10 angeordnet sein.

Zur Einstellung eines Lüftspiels zwischen dem Reibbelag 8 und der Bremsscheibe 3, unter Berücksichtigung des Verschleißes des Reibbelages 8, ist die als Gewindespindel ausgebildete Stellspindel 10 drehbar im Bremssattel gelagert und über eine nicht dargestellte Nachstelleinrichtung bewegbar.

Der Bremssattel 1 ist auf seiner der Bremsscheibe 3 zugewandten Seite weitgehend durch einen Verschlussdeckel 7 verschlossen, der im Austrittsbereich der Stellspindel 10 durchbrochen ist.

Zur Abdichtung des Austrittsbereichs der Stellspindel 10 aus dem Bremssattel 1 ist ein mit dem Verschlussdeckel 7 verbundener Faltenbalg 9 vorgesehen, der anderseits an der Stellspindel 10 befestigt ist.

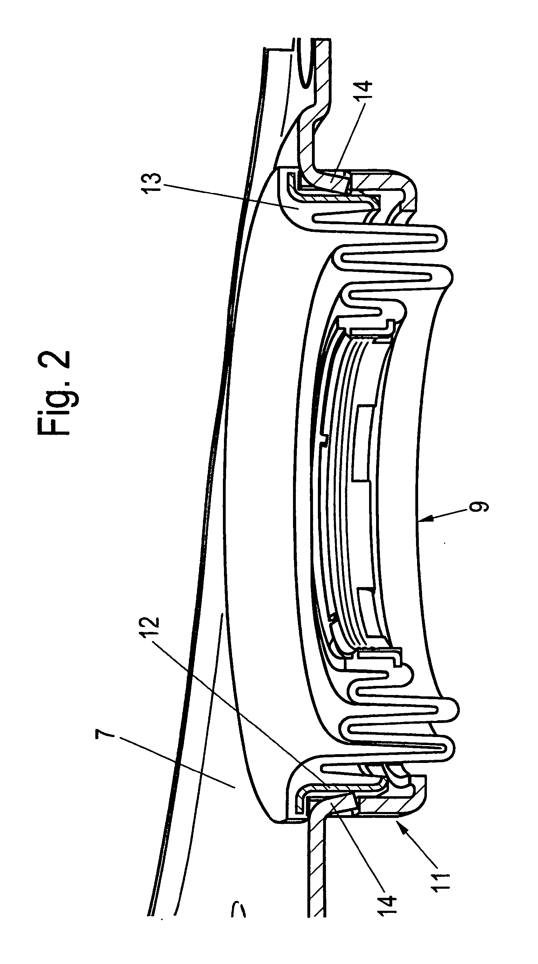

Erfindungsgemäß ist der Faltenbalg 9 formschlüssig am Verschlussdeckel 7 angeschlossen, wozu, wie besonders deutlich in der Figur 2 zu erkennen ist, der Verschlussdeckel 7 Formschlussmittel in Form von Rastzungen 14 aufweist.

Diese Rastzungen 14 sind in einen den Austrittsbereich der Stellspindel 10, auf deren Darstellung in der Figur 2 verzichtet ist, begrenzenden umlaufenden Kragen 11 eingestanzt und erstrecken sich, geringfügig abgewinkelt in den Innenraum des Austrittsbereichs und zwar derart, dass sie gegenüber dem Faltenbalg 9 entgegen der Einschieberichtung im Sinne eines Widerhakens fungieren. D.h., die Rastzungen 14 graben sich beim Einschieben des Faltenbalges 9 in den Austrittsbereich in das einen Stabilisierungsring 12 umhüllende Material 13 des Faltenbalges 9, das aus einem Kunststoff, vorzugsweise einem Elastomer besteht.

Dabei entspricht der Außendurchmesser des Faltenbalgs 9 im Anlagebereich an der Innenfläche des Kragens 11 etwa dessen lichtem Durchmesser, ohne dass jedoch besonders enge Toleranzen eingehalten werden müssen.

Im Übrigen ist der Faltenbalg 9 mit einem abgewinkelten Rand versehen, der beim Einschieben in den Austrittsbereich des Verschlussdeckels durch Anlage an diesen einen Anschlag bildet.

Bevorzugt sind die Rastmittel, hier die Rastzungen 14, über den Umfang des Kragens 11 verteilt angeordnet, vorzugsweise in gleichen Winkelabständen.

## Patentansprüche

1. Scheibenbremse, mit einem Bremssattel (1), in dem zwei in Funktion gegen eine Bremsscheibe (3) pressbare Bremsbeläge (4) angeordnet sind, von denen ein aktionsseitiger über mindestens eine Stellspindel (10) mittels einer Zuspanneinrichtung betätigbar ist, wobei die Stellspindel (10) durch einen einen Aufnahmeraum (2) des Bremssattels (1) zur Bremsscheibe (3) hin verschließenden Verschlussdeckel (7) geführt ist, an dem zur Abdichtung ein andererseits an der Stellspindel (10) befestigter Faltenbalg (9) formschlüssig angeschlossen ist, **dadurch gekennzeichnet, dass** der Verschlussdeckel (7) im Durchtrittsbereich der Stellspindel (10) einen abgewinkelten Kragen (11) aufweist, in den Formschlussmittel eingebracht sind, die in den Faltenbalg (9) eingreifen.

2. Scheibenbremse nach Anspruch 1, **dadurch gekennzeichnet, dass** die Formschlussmittel eingestanzt sind.

3. Scheibenbremse nach Anspruch 1 oder 2, **dadurch gekennzeichnet, dass** die Formschlussmittel aus Rastzungen (14), Noppen oder dergleichen bestehen.

4. Scheibenbremse nach Anspruch 3 , **dadurch gekennzeichnet, dass** die Rastzungen (14) in Einschieberichtung des Faltenbalges (9) im Sinne eines Widerhakens abgewinkelt verlaufen.

5. Scheibenbremse nach einem der Ansprüche 3 oder 4, **dadurch gekennzeichnet, dass** die Raszungen (14) über den Umfang des Kragens (11) verteilt angeordnet sind.

6. Scheibenbremse nach einem der Ansprüche 3 bis 5, **dadurch gekennzeichnet, dass** die Raszungen (14) in gleichen Winkelabständen zueinander angeordnet sind.

## Claims

1. Disc brake comprising a brake calliper (1), wherein two brake linings (4) are arranged that are adapted to be pressed against a brake disc (3) in service, whereof one, on the action side, is adapted to be controlled via at least one adjusting spindle (10) by means of an brake applicator device, with said adjusting spindle being passed through a cover (7) closing a receiving space (2) in said brake calliper (3) towards said brake disc (3), to which joins a bellows element (9) in a form-fitting manner that is fastened, on the other side, on said adjusting spindle so as to ensure tightness, **characterised in that** said cover (7) presents a bent collar (11) in the region in which said adjusting spindle (10) passes, into which form-fitting means are inserted which engage in said bellows element (9).

2. Disc brake according to Claim 1, **characterised in that** said form-fitting means are formed by stamping.

3. Disc brake according to Claim 1 or 2, **characterised in that** said form-fitting means are constituted by locking tongues (14), nops or similar elements.

4. Disc brake according to Claim 3, **characterised in that** said locking tongues (14) extend along a bent path along the direction of insertion of said bellows element (9) in the sense of barbs.

5. Disc brake according to Claim 3 or 4, **characterised in that** said locking tongues (14) are distributed along the periphery of said collar (11).

6. Disc brake according to any of the Claims 3 to 5, **characterised in that** said locking tongues (14) are disposed at equal angular distances from each other.

## Revendications

1. Frein à disque comprenant un étrier de frein (1), dans lequel deux garnitures de frein (4) sont disposées, qu'on peut presser contre un disque de frein (3) en service, dont l'une, du côté d'action, est apte à être commander via au moins une broche de réglage (10) moyennant un dispositif applicateur du frein, à ladite broche de réglage étant passée à travers d'un couvercle (7) fermant un espace de réception (2) dudit étrier de frein (1) vers ledit disque de frein (3), auquel se joigne, en engagement positif, un soufflet (9) fixé, d'autre coté, à ladite broche de réglage afin d'assurer l'étanchéité, **caractérisé en ce que** ledit couvercle (7) présente un collier (11) plié dans la zone de passage de ladite broche de réglage (10), dans lequel sont inséré des moyens d'engagement positif, qui sont mis en prise dans ledit soufflet (9).

2. Frein à disque selon la revendication 1, **caractérisé en ce que** lesdits moyens d'engagement positif sont formés par poinçonnage.

3. Frein à disque selon la revendication 1 ou 2, **caractérisé en ce que** lesdits moyens d'engagement positif sont composés des languettes d'encliquetage (14), nopes ou éléments similaires.

4. Frein à disque selon la revendication 3, **caractérisé en ce que** lesdites languettes d'encliquetage (14) s'en tendent selon une voie pliée en sens d'insertion dudit soufflet (9) au sens d'une barbe.

5. Frein à disque selon la revendication 3 ou 4, **caractérisé en ce que** lesdites languettes d'encliquetage (14) sont disposées en distribution sur la périphérie dudit collier (11).

6. Frein à disque selon une quelconque des revendications 3 à 5, **caractérisé en ce que** lesdites languettes d'encliquetage (14) sont disposées aux écarts angulaires égaux l'une de l'autre.
